# EUROPEAN PATENT APPLICATION

(11) **EP 1 883 233 A1**
(43) Date of publication of application: **30.01.2008**
(21) Application number: 07108454.5
(22) Date of filing: 18.05.2007
(51) Int. Cl.: H04N 5/50

(54) **Changing channel according to status of an image signal**

(30) Priority: 27.07.2006 KR 20060070970
(71) Applicant: Samsung Electronics Co., Ltd., Suwon-si Gyeonggi-do (KR)
(72) Inventor: Lee, Chang-jin, Yeongtong-gu Suwon-si Gyeonggi-do (KR)
(74) Representative: Clark, Charles Robert

(57) **Abstract**

Provided are a method for changing a channel according to a status of an image signal and an image display apparatus adopting the method. The method includes: determining a status of an image signal received from an external source; and if it is determined that the status of the received image signal is instable, changing a channel according to one of an automatic channel selection mode and a manual channel selection mode. Thus, a user can directly select a channel having good receiving sensitivity according to a change in a wireless environment without requesting services.

## Description

Methods and apparatuses consistent with the present invention relate to changing or retuning a broadcast channel according to a status of an image signal. More particularly, but not exclusively, the present invention relates to automatically or manually changing (or retuning) a channel according to a status of an image signal received wirelessly.

Image display apparatuses are apparatuses that display images received from external sources wirelessly through antennas. Examples of image display apparatuses include, but are not limited to, mobile phones, personal digital assistants (PDAs), televisions (TVs), set-top boxes, and so on.

Since such image display apparatuses receive an image signal wirelessly, an intensity of the received image signal is important. In other words, since a displayed image looses reproduction qualities or is cut if the intensity of the received image signal falls below a threshold intensity, the image signal should be received through a channel having the highest available intensity.

In recent years, images that are received wirelessly by portable wireless TVs, mobile phones, or the like have become increasingly popular, and the number of channels for providing various images has also increased. Thus, interference may occur between apparatuses or between image signals. Also, an intensity of an image signal may vary due to problems occurring in a wireless channel environment. Thus, in some instances a channel must be changed according to an intensity of a received image signal in order to display a stable image.

However, if an intensity of a received image signal is unstable, a user must enter a display apparatus' factory mode in order to change a wireless channel.

Here, the "factory mode" generally refers to a mode for product specification management and inspection management of an apparatus and factory mode is used in an apparatus manufacturing process. Also, the factory mode may not be enabled for use by a user in certain types of image display apparatuses. And, if the factory mode is enabled, it is relatively difficult for a general user to use the factory mode.

Accordingly, if the intensity of the received image signal is continuously unstable, the user must continuously enter the factory mode in order to change a channel or retune to that channel. This is inconvenient to the user, and a relatively long time is required to enter the factory mode and change the channel or channel settings. As a result, a time required for changing the channel is increased.

In addition, if the factory mode is disabled in an image display apparatus, or the user is not able to use the factory mode, services must be requested. Thus, the inconvenience of the user is further increased.

The present invention provides a method for automatically or manually selecting a channel according to a status of an image signal received wirelessly and an image display apparatus adopting the method.

According to an aspect of the present invention, there is provided a method for changing or retuning a channel according to a status of an image signal, including: determining a status of an image signal received from an external source; and if it is determined that the status of the received image signal is instable or unstable, changing or retuning a channel according to one of an automatic channel selection mode and a manual channel selection mode. Alternatively, the present invention provides a method for tuning a broadcast channel according to status of an image signal received by a broadcast receiver, the method comprising: determining a status of the channel's image signal received by the receiver from a external source; and if it is determined that the status of the received image signal is unstable, retuning the channel according to one of an automatic channel selection mode and a manual channel selection mode. In other words, the channel can be retuned to receive the same signal but which is transmitted at a different frequency.

The automatic channel selection mode may be a mode in which the current channel is automatically changed or retuned to a channel through which an image signal is stably received, and the manual channel selection mode may be a mode in which the current channel is changed or retuned according to a selection of a user.

The changing or retuning of the channel according to one of the automatic channel selection mode and the manual channel selection mode may include: if the automatic channel selection mode is selected, determining whether the intensity of the received image signal is unstable for a pre-set period of time, wherein if it is determined that the intensity of the received image signal is unstable for the pre-set period of time, the channel is automatically changed or retuned into a channel through which an image signal is received in a highest intensity.

The changing or retuning of the channel according to one of the automatic channel selection mode and the manual channel selection mode may include: if the manual channel selection mode is selected, displaying an intensity of an image signal received through each channel, wherein the channel is changed or retuned into a channel selected by the user with reference to the displayed image signal.

The intensity of the received image signal may be checked to determine the status of the received image signal.

The intensity of the received image signal may be determined based on an automatic gain control (AGC) voltage of the received image signal.

According to another aspect of the present invention, there is provided an image display apparatus including: an AGC unit outputting an AGC voltage of an image signal received from an external source; and a controller arranged for changing or retuning a channel according to one of an automatic channel selection mode and a manual channel selection mode if it is determined that a status of the received image signal is unstable based on the AGC voltage output from the AGC unit.

The automatic channel selection mode may be a mode in which the current channel is automatically changed or retuned into a channel through which an image signal is stably received, and the manual channel selection mode may be a mode in which the current channel is changed or retuned according to a selection of a user.

If the automatic channel selection mode is selected, the controller may determine whether the intensity of the received image signal is unstable for a pre-set period of time, and if it is determined that the intensity of the received image signal is unstable for the pre-set period of time, the controller may automatically change or retune the channel into a channel through which an image signal is received in a highest intensity.

If the manual channel selection mode is selected, the controller may display an intensity of an image signal received through each channel and change or retune the channel into a channel selected by a user with reference to the displayed intensity of the image signal.

The controller may check the intensity of the received image signal to determine the status of the received image signal.

The controller may determine the intensity of the received image signal based on an AGC voltage of the received image signal.

The image display apparatus may further include: an on-screen display (OSD) generator generating a channel selection menu for selecting the automatic channel selection mode and the manual channel selection mode; and a key input unit including a key for selecting one of the automatic channel selection mode and the manual channel selection mode or a key for changing the channel during selecting of the manual channel selection mode.

Embodiments of the present invention are now described by way of example and with the accompanying drawings, in which:
Figure 1 is a block diagram illustrating an image display apparatus according to an exemplary embodiment of the present invention;
Figure 2 is a flowchart illustrating a method for changing a channel in an image display apparatus according to a status of an image signal according to an exemplary embodiment of the present invention; and
Figure 3 is a flowchart illustrating a method for changing a channel in an image display apparatus according to a status of an image signal according to another exemplary embodiment of the present invention.

Throughout the drawings, the same drawing reference numerals will be understood to refer to the same elements, features, and structures.

The matters described herein such as a detailed construction and elements are provided to assist in a comprehensive understanding of the exemplary embodiments of the invention and are merely exemplary. Accordingly, those of ordinary skill in the art will recognize that various changes and modifications of the exemplary embodiments described herein can be made without departing from the scope of the invention as defined by the appended claims. Also, descriptions of well-known functions and constructions are omitted for clarity and conciseness.

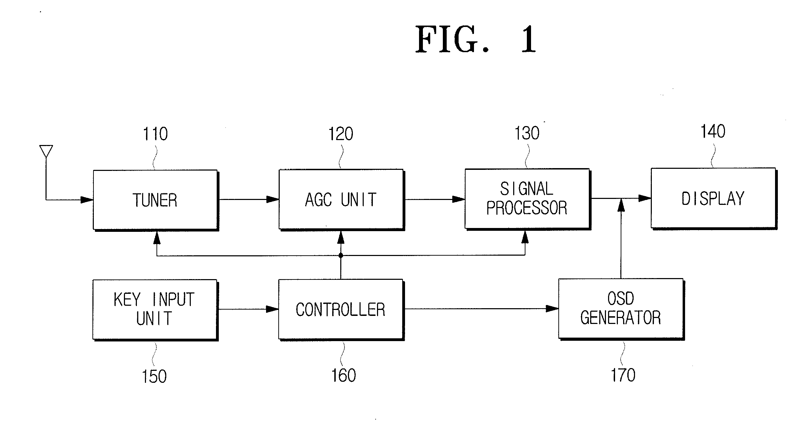

Figure 1 is a block diagram of an image display apparatus according to an exemplary embodiment of the present invention.

The image display apparatus according to the present exemplary embodiment provides an automatic channel selection mode in which a wireless channel is automatically selected and a manual channel selection mode in which a user can manually select a wireless channel.

Referring to Figure 1, the image display apparatus according to the present exemplary embodiment includes a tuner 110, an automatic gain control (AGC) unit 120, a signal processor 130, a display 140, a key input unit 150, a controller 160, and an on-screen display (OSD) generator 170.

The tuner 110 tunes a channel selected by a user and the tuner receives an image signal from the tuned channel wirelessly through an antenna. The AGC unit 120 outputs an AGC voltage of the image signal received through the tuner 110.

The signal processor 130 converts the AGC voltage output from the AGC unit 120 into a digital signal and processes the image signal received through the tuner 110 so as to display an image.

The display 140 displays the image processed by the signal processor 130. The display 140 also displays a channel selection menu for selecting the automatic channel selection mode and the manual channel selection mode.

The key input unit 150 includes a menu key through which the channel selection menu is requested and includes a key through which the automatic channel selection mode and the manual selection mode are selected on the channel selection menu that is displayed on the display 140. The key input unit 150 also includes a key through which a user can select a channel.

The controller 160 determines an intensity of the image signal received through the tuner 110 wirelessly based on the AGC voltage, which has been converted into the digital signal by the signal processor 130. According to the present exemplary embodiment, the AGC voltage is used to automatically control a gain of a received image signal and is output according to an intensity of the received image signal. Thus, the controller 160 may determine the intensity of the received image signal with reference to the output AGC voltage.

If a command to select the automatic channel selection mode is input through the key input unit 150, the controller 160 automatically changes or retunes a channel according to the determined intensity of the received image signal. If a command to select the manual channel selection mode is input through key input unit 150, the controller 160 changes a current channel to a channel that is manually selected by the user.

If a command to request the channel selection menu is input through the key input unit 150, the OSD generator 170 is controlled by the controller 160 to generate the channel selection menu and to display the channel selection menu on the display 140.

The above-described image display apparatus according to the present exemplary embodiment includes the tuner 110, the automatic gain control (AGC) unit 120, the signal processor 130, the display 140, the key input unit 150, the controller 160, and the on-screen display (OSD) generator 170. However, this embodiment is just one of many examples of the present invention. For instance, it is possible to implement a method for changing a channel, according to a status of an image signal, by an image display apparatus comprising an AGC unit outputting an AGC voltage of an image signal received from an external source, and a controller changing a channel according to one of an automatic channel selection mode and a manual channel selection mode if it is determined that a status of the received image signal is unstable based on the AGC voltage that is output from the AGC unit.

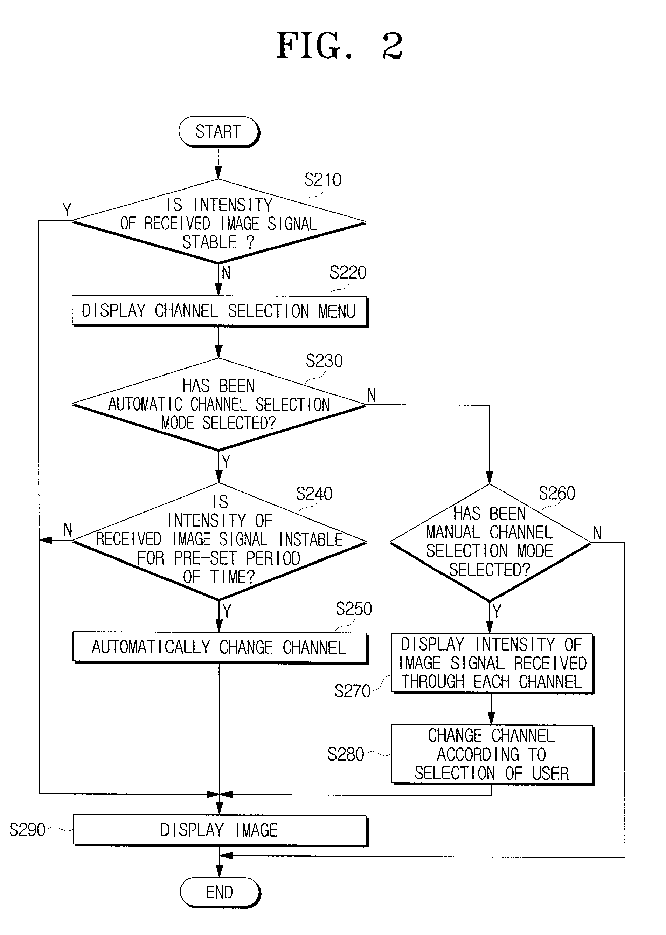

Figure 2 is a flowchart of a method for changing a channel according to a status of an image signal in the exemplary image display apparatus illustrated in Figure 1, according to an exemplary embodiment of the present invention. Referring to Figure 2, in operation S210, the controller 160 determines whether an intensity of a received image signal is stable. Here, the controller 160 may determine whether the intensity of the received image signal is stable based on an AGC voltage, and a user may check a status of an image displayed on the display 140 with the naked eye to determine whether the intensity of the received image signal is stable.

If it is determined in operation S210 that the intensity of the received image signal is not stable, then the controller 160 controls the OSD generator 170 to generate a channel selection menu and to display the channel selection menu on the display 140 in operation S220. Alternatively, if a command to request the channel selection menu is input through the key input unit 150 from the user, who has determined that the intensity of the received image signal is not stable, then the controller 160 may display the channel selection menu generated by the OSD generator 170 on the display 140.

Here, the OSD generator 170 may generate the channel selection menu so that an automatic channel selection mode menu and a manual channel selection mode menu are positioned on a lower menu of the channel selection menu, or so that the automatic channel selection mode menu and the manual channel selection mode menu are positioned as the channel selection menu.

In operation S230, the controller 160 determines whether an automatic channel selection mode has been selected. If a command to select the automatic channel selection mode is input through the key input unit 150, then the controller 160 determines that the automatic channel selection mode has been selected.

If it is determined in operation S230 that the automatic channel selection mode has been selected, then the controller 160 determines whether the intensity of the received image signal is unstable for a pre-set period of time in operation S240. If it is determined in operation S240 that the intensity of the received image signal is unstable for the pre-set period of time, then the controller 160 automatically controls the tuner 110 to change a current channel to a channel through which the image signal can be received with high receiving sensitivity, (i.e., change or retune the channel to one with higher or highest intensity) in operation S250. The instability of the intensity of the received image signal for the pre-set period of time means that the intensity of the received image signal is weak for the pre-set period of time. Thus, a displayed image is determined as being poor, and thus a channel is changed or retuned.

If it is determined in operation S230 that the automatic channel selection mode has not been selected, then the controller 160 determines whether the manual channel selection mode has been selected in operation S260. If a command to select the manual channel selection mode is input through the key input unit 150, then the controller 160 determines that the manual channel selection mode has been selected.

If it is determined in operation S260 that the manual channel selection mode has been selected, then the controller 160 controls the OSD generator 170 to display an intensity of an image signal, which is received from each channel through the tuner 110, on the display 140, in operation S270

If the user manually selects a channel through which an image signal is received in the highest intensity, using the key input unit 150, the controller 160 controls the tuner 110 to change the current channel to a channel selected by the user according to the selection of the user in operation S280. Here, the manual change of the channel may cause a status of a displayed image to be poorer than when the channel is automatically changed. However, the displayed image may not be muted unlike an image received through the automatically changed channel.

If it is determined in operation S210 that the intensity of the received image signal is unstable, and the automatic channel selection mode has been selected, then the current channel is automatically changed to the channel through which the image signal can be received with the high receiving sensitivity, (i.e., the channel with the highest intensity) in operation S250, or if the automatic channel selection mode has not been selected, then the current channel is changed into the channel manually selected by the user in operation S280. After operation S210 (if the intensity of the received image signal is stable), or after operation S250 or operation S280, the controller 160 displays an image processed by the signal processor 130 on the display 140 in operation S290.

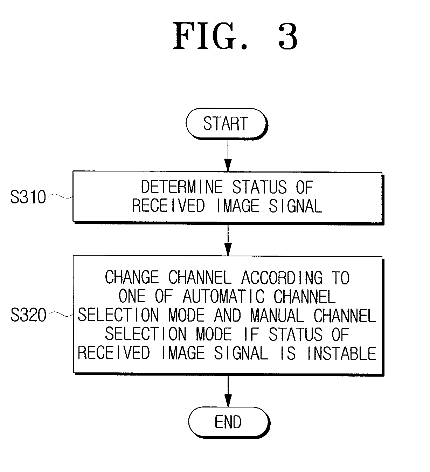

Figure 3 is a flowchart illustrating a method for changing a channel according to a status of an image signal in an image display apparatus illustrated according to another exemplary embodiment of the present invention.

Referring to Figure 3, the controller 160 determines the status of an image signal received from an external source in operation S310.

The controller 160 changes a channel according to one of an automatic channel selection mode and a manual channel selection mode if it is determined that the status of the received image signal is unstable in operation S320.

It has been described that a current channel is changed to a channel through which an image signal can be received in the highest intensity. However, the above description is only an example. Thus, the channel may also be changed to a channel through which an image signal exceeding a predetermined reference intensity is received.

As described above, according to exemplary embodiments of the present invention, a user can directly select a channel having good receiving sensitivity according to a change in a wireless environment without requesting services. Thus, a time required for changing a channel can be reduced. Also, a quality of an image signal can be tuned to better suitthe user's requirements. As a result, convenience of the user can be increased.

The foregoing exemplary embodiment and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for changing a channel according to a status of an image signal, the method comprising:
determining a status of the channel's image signal received from an external source; and
if it is determined that the status of the received image signal is unstable, changing the channel according to one of an automatic channel selection mode and a manual channel selection mode.

2. The method of claim 1, wherein the determining of the status of the received image signal comprises determining an intensity of the image signal.

3. The method of claim 1 or 2, wherein the automatic channel selection mode comprises a mode in which a current channel is automatically changed to a channel through which an image signal is stably received, and
wherein the manual channel selection mode comprises a mode in which the current channel is changed according to a selection of a user.

4. The method of claim 1 or 2, wherein the changing of the channel according to one of the automatic channel selection mode and the manual channel selection mode comprises:
if the automatic channel selection mode is selected, determining whether an intensity of the received image signal is unstable for a pre-set period of time,
wherein if it is determined that the intensity of the received image signal is unstable for the pre-set period of time, the channel is automatically changed to a channel through which an image signal is received in a highest intensity.

5. The method of claim 1 or 2, wherein the changing of the channel according to one of the automatic channel selection mode and the manual channel selection mode comprises:
if the manual channel selection mode is selected, displaying an intensity of the image signal received through each available channel,
wherein the channel is changed to a channel selected by a user with reference to the displayed intensity.

6. The method of any preceding claim, wherein an intensity of the received image signal is checked to determine the status of the received image signal.

7. The method of any preceding claim, wherein an intensity of the received image signal is determined based on an automatic gain control (AGC) voltage of the received image signal.

8. An image display apparatus comprising:
an automatic gain control (AGC) unit arranged to output an AGC voltage of an image signal received from an external source; and
a controller arranged to change a channel according to one of an automatic channel selection mode and a manual channel selection mode when it is determined that a status of the received image signal is unstable based on the AGC voltage output from the AGC unit.

9. The image display apparatus of claim 8, wherein the status of the received image signal is determinable based on an intensity of the received image signal.

10. The image display apparatus of claim 8 or 9, wherein the automatic channel selection mode comprises a mode in which a current channel is automatically changeable to a channel through which the image signal is stably received, and
wherein the manual channel selection mode comprises a mode in which the current channel is changeable according to a selection of a user.

11. The image display apparatus of claim 8 or 9, wherein if the automatic channel selection mode is selected, the controller is arranged to determine whether an intensity of the received image signal is unstable for a pre-set period of time, and
when it is determined that the intensity of the received image signal is unstable for the pre-set period of time, the controller is arranged to automatically retune the channel to a channel through which the image signal is received in a higher or highest intensity.

12. The image display apparatus of any of claims 8 to 11, wherein, when the manual channel selection mode is selected, the controller is arranged to display an intensity of the image signal received through each channel, and
wherein the controller is arranged to retune the channel to a channel selected by a user with reference to the displayed intensity.

13. The image display apparatus of claim 8, wherein the controller is arranged to check an intensity of the received image signal to determine the status of the received image signal.

14. The image display apparatus of claim 8, wherein the controller is arranged to determine an intensity of the received image signal based on an AGC voltage of the received image signal.

15. The image display apparatus of claim 8, further comprising:
an on-screen display (OSD) generator arranged to generate a channel selection menu for selecting the automatic channel selection mode and the manual channel selection mode; and
a key input unit comprising at least one key for selecting one of the automatic channel selection mode and the manual channel selection mode and another key for changing the channel when the manual channel selection mode is selected.
